# EUROPEAN PATENT SPECIFICATION

(11) **EP 3 870 528 B1**
(45) Date of publication and mention of the grant of the patent: **03.12.2025**
(21) Application number: 19875116.6
(22) Date of filing: 24.10.2019
(51) Int. Cl.: B65G 47/71, B65G 47/244, B65G 47/68, B65G 47/84, B65G 13/10, B65G 47/54

(54) **POSITIVE DISPLACEMENT SORTER WITH PARALLEL DIVERT AND DIAGONAL DISCHARGE**
SORTIERER MIT POSITIVER VERDRÄNGUNG, PARALLELER ABLENKUNG UND DIAGONALER ENTLADUNG
TRIEUSE À DÉPLACEMENT POSITIF DOTÉE D'UNE DÉVIATION PARALLÈLE ET D'UNE ÉVACUATION DIAGONALE

(30) Priority: 24.10.2018 US 201862749707 P
(43) Date of publication of application: 01.09.2021
(73) Proprietor: Dematic Corp., Grand Rapids, MI 49505 (US)
(72) Inventor: PILARZ, Nolan R., Ada, Michigan 49301 (US); COLE, Veronique, Greenville, Michigan 48838 (US); HEBBUR, Shreedhar Murthy, Kentwood, Michigan 49512 (US); DUNCAN, Jeffery D., Grand Rapids, Michigan 49504 (US); THOMAS, Nicholas M., Cedar Springs, Michigan 49319 (US); DEMAN, Steven M., Rockford, Michigan 49341 (US); KARAS, John M., Grand Rapids, Michigan 49546 (US); DEVRIES, Jeffrey S., Grand Rapids, Michigan 49546 (US); BOORSMA, Jeffery T., Grand Rapids, Michigan 49546 (US); TRIESENBERG, Thomas H., Rockford, Michigan 49341 (US)
(74) Representative: Moser Götze & Partner Patentanwälte mbB
(86) International application number: PCT/IB2019/059133
(87) International publication number: WO 2020/084566

(56) References cited:
- WO-A1-2014/123574
- WO-A1-2019/025904
- JP-A- H11 193 128
- US-A- 6 139 240
- US-A1- 2011 022 221
- US-B2- 10 040 640
- US-B2- 9 038 809
- US-B2- 9 457 961

## Description

### BACKGROUND OF THE INVENTION

The present invention is directed to an article sorter apparatus and method of diverting articles and, in particular, to a positive displacement sorter and method that is capable of diverting at least some articles with more than one pusher shoe travelling together across a conveying surface to divert an article. Such diverting is known as parallel diverting. It should be understood that some parallel diverting sorters can also be capable of diverting articles with the pusher shoes extending diagonally across the conveying surface especially for long articles.

One difficulty with parallel sorters is that the orientation of the diverted articles in a longitudinal direction does not match that of the take-away lanes which are usually oriented at an angle, such as 20 degrees to 30 degrees from the direction of the sorter article conveying surface. This may cause article jams both between the sorter article conveying surface and the take-away lanes or further downstream in the conveyor lanes where they often make a turn in order to orient them in direction more perpendicular to the sorter article conveying surface. Conveyor systems may implement curves to direct the flow of items or packages, such as downstream of the take-away lane. Conveyors may be driven by various means, such as gears or belts.

The document WO 2019/025904 A1 discloses an article sortation system with an article sorter and discharge conveyors, wherein the discharge conveyors are oriented orthogonally to an article support surface of the article sorter.

US 6,139,240 A discloses an automated warehouse including a plurality of article storage shelves having a plurality of article storage sections arranged therein. An article may be conveyed from a main conveyer at one end of the shelves through a branching conveyer to a transfer apparatus. The transfer apparatus can transfer the article to and from the storage section. The branching conveyer extends substantially normal to the main conveyer. The main conveyer includes a plurality of slats extending normal to a conveying direction and a plurality of pushing shoes corresponding with the slats. The main conveyer additionally includes a device for aligning and moving a predetermined number of the pushing shoes at a position where the branched conveyer is located. US 6,139,240 discloses a positive displacement sorter according to the preamble of claim 1 and a method of diverting articles according to the preamble of claim 11.

### SUMMARY OF THE INVENTION

The present invention is directed to a solution of the difficulties of the prior art including those referred to above.

A positive displacement sorter and method of diverting articles, according to the invention is disclosed in claim 1 and includes a conveying surface configured to convey articles in a longitudinal direction and at least one diagonal take-away lane, extending diagonally from the conveying surface to receive articles being diverted from said conveying surface. A plurality of pushers are configured to move together in a lateral direction in order to displace an item on the conveying surface to the diagonal take-away lane. A rotational system is configured to rotate a diverted article in the direction of the take-away lane. The rotational system is a portion of the take-away lane. The rotational system rotates a leading portion of a diverted article in the direction of the take-away lane with respect to its trailing portion.

The rotational system may be made up of another conveying surface having a first portion and a second portion, said first portion biasing articles toward said second portion, the second portion conveying articles in a directions of the take-away lane. The first portion may include a plurality of parallel rollers that are angled to convey in the directions toward the second portion. The rollers may be at an angle of between 10 degrees and 20 degrees with respect to the second portion. The second portion may have a surface with a higher friction than the first portion. The second portion may be a high-friction belt or a plurality of high-friction parallel rollers.

The first and second portions may have parallel rollers with the parallel rollers of the first portion being not co-axial with respect to the parallel rollers of the second portion. Separate drive belt assemblies may be configured to drive the parallel rollers of the first portion and the parallel rollers of the second portion. The first and second portions may have a same conveying speed.

Therefore, the present invention provides positive displacement sorter having a take-away lane and a rotational system to rotate a leading portion of an article in the direction of the take-away lane. The rotational system includes a first and a second portion of a conveying surface of the take-away lane. The first portion of the conveying surface are angled to convey the article toward the second portion of the conveying surface. The second portion is configured to convey the articles in the direction of the take-away lane.

These and other objects, advantages and features of this invention will become apparent upon review of the following specification in conjunction with the drawings.

### BRIEF DESCRIPTION OF THE DRAWINGS

FIG. 1 is a perspective view of a positive displacement sorter according to an embodiment of the invention;
FIG. 2 is a perspective view of the take-away lane of the sorter in FIG. 1;
FIG. 3 is a top plan view of the take-away lane in FIG. 2;
FIG. 3A is an enlarged plan view of the area designated 3A in FIG. 3;
FIG. 4 is the same view as FIG. 2 showing the take-away lane with the rollers removed to reveal details of roller drive assemblies;
FIG. 5 is a top plan view of the take-away lane in FIG. 4;
FIG. 6 is a top plan view of another take-away lane with the rollers removed to reveal details of roller drive assemblies; and
FIG. 7 is a top plan view illustrating operation of the positive displacement sorter in FIG. 1.

### DETAILED DESCRIPTION OF THE PREFERRED EMBODIMENT

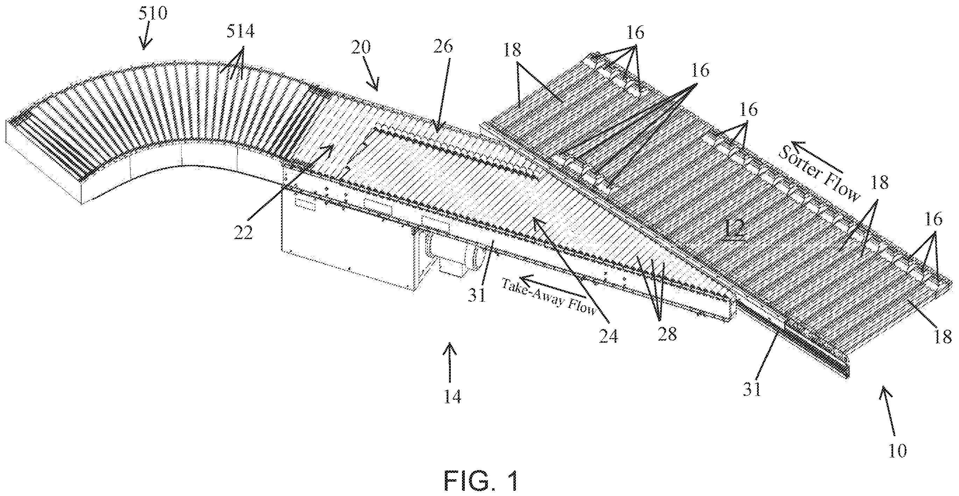

Referring now to the drawings and the illustrative embodiments depicted therein, a positive displacement sorter 10 includes a conveying surface 12 configured of interconnected slats 18 to convey articles in a longitudinal direction as illustrated by the sorter flow arrow and at least one diagonal take-away lane 14, extending diagonally from said conveying surface to receive articles being diverted from said conveying surface. (FIG. 1) Positive displacement sorter 10 is capable of diverting articles without rotating the articles and is thus a parallel diverter of the type disclosed in commonly assigned Untied States Patent No. 6,814,216. This is accomplished by a plurality of pushers 16 being configured to generally move together in a lateral direction in order to displace an item on conveying surface 12 to diagonal take-away lane 14.

A rotational system is configured to rotate a leading portion of a diverted article in the direction of take-away lane 14. Because the leading portion of the diverted article is rotated in the diverting direction with respect to the trailing portion, the gap between the diverted article and the trailing article is not substantially reduced and the diverted article is placed on take-away lane 14 sooner than prior art systems in which the trailing portion of the diverted article is retarded with respect to movement of the leading portion of the article. Thus, the positive displacement sorter is operated more efficiently.

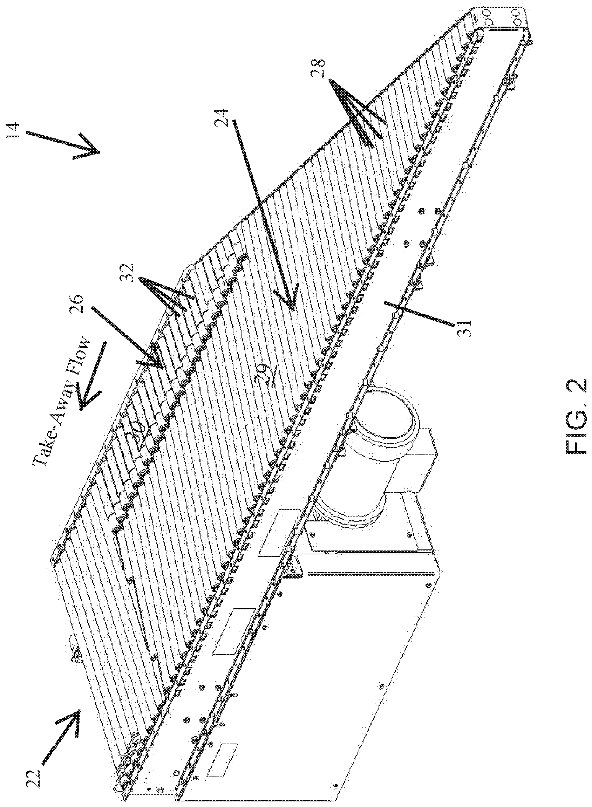

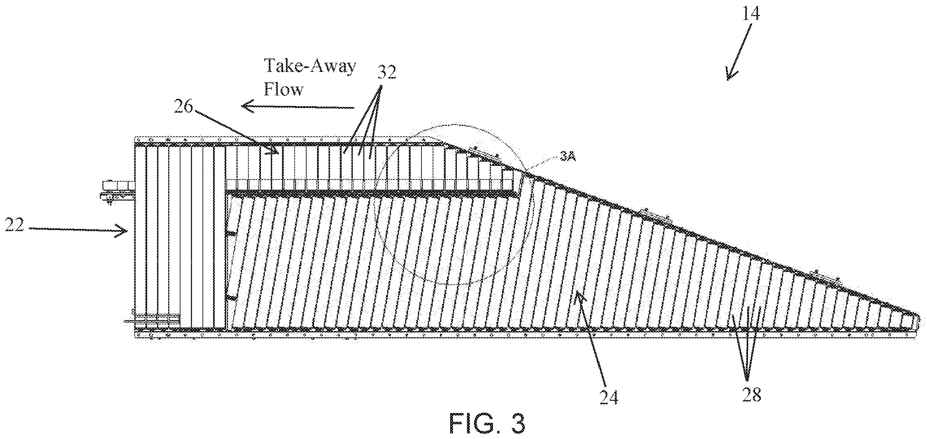

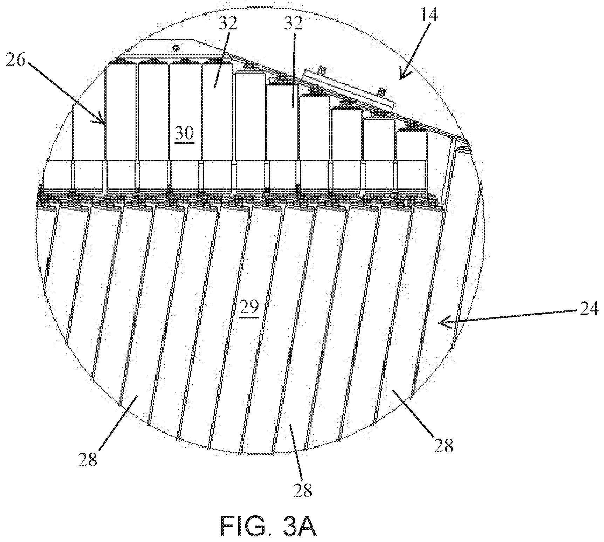

In positive displacement sorter 10, a rotation system 20 is a portion of take-away lane 14. Rotational system 20 is made up of a conveying surface 22 having a first portion 24 and a second portion 26. (FIGS. 1-3). First portion 24 biases articles toward second portion 26 and second portion 26 conveys articles in a direction of take-away lane 14. First portion 24 is made up of a plurality of parallel rollers 28 that are angled toward second portion 26 in order to convey articles in the direction toward the second portion 26. In the illustrated embodiment, rollers 28 are set at an angle of between ten (10) degrees and twenty (20) degrees with respect to second portion 26. (FIG. 3).

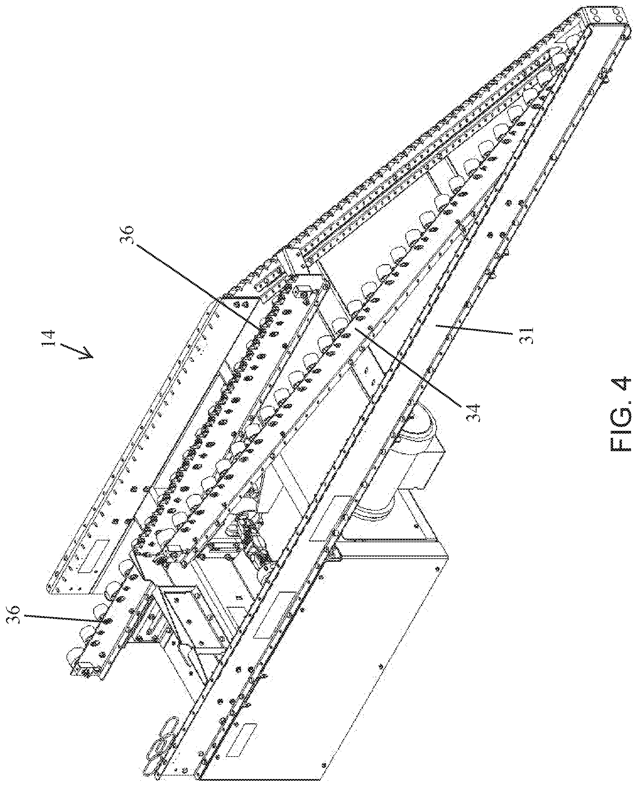

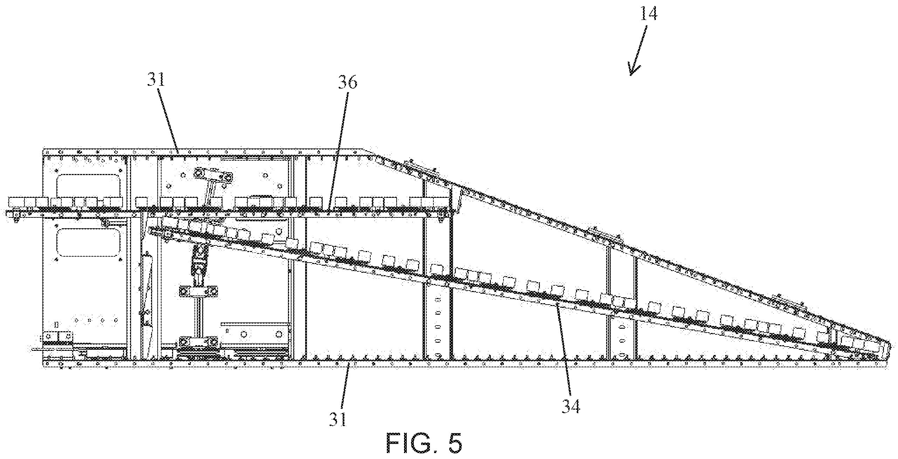

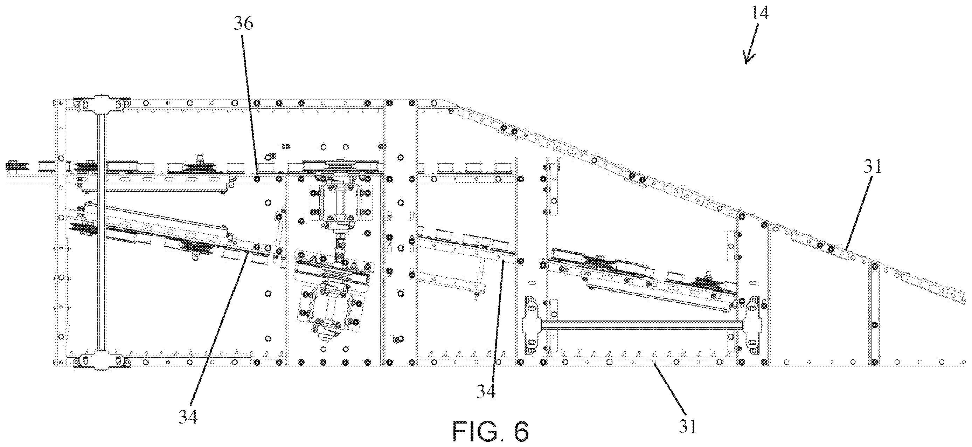

Second portion 26 has a surface 30 with a higher friction than a surface 29 of first portion 24. (FIG. 3A) Second portion 26 may be made up of a high-friction belt (not shown). Second portion 26 may be made up of a plurality of high-friction parallel rollers 32 as in the illustrated embodiment. (FIGS. 3 and 3A). Parallel rollers 28 of first portion 24 are not co-axial with respect to the parallel rollers 32 of second portion 26. Separate belted drive assemblies 34 and 36 drive the parallel rollers 28 of first portion 24 and parallel rollers 32 of second portion 26. (FIGS. 4-6) While the separate belted drive assemblies 34, 36 could drive conveying surface 22 in first portion 24 and second portion 26 at different speeds, in the illustrated embodiment they are driven at generally the same conveying speed. Rollers 28, 32 and drive assemblies 34, 36 are supported by a frame 31.

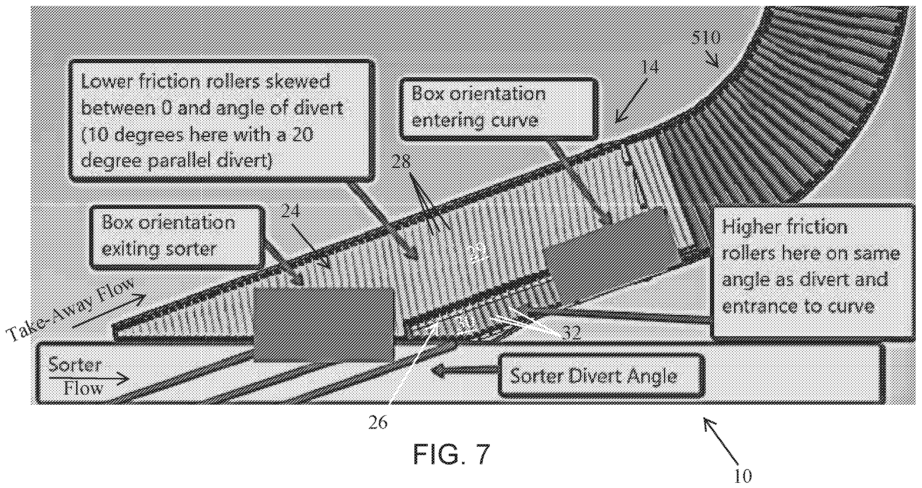

Thus, as illustrated in FIG. 7, articles entering take-away lane 14 in a generally longitudinal orientation after having been parallel diverted, get biased toward second portion 26 by the relative angle of rollers 28 of first portion 24. When a portion of the article comes into contact with the high friction surface 30 of second portion 26, second portion 26 takes over handling of the article which leads the article in the direction of movement of conveying surface 22 which resists any contact with a downstream interface between sorter 10 and take-away lane 14 where articles could get jammed.

## Claims

1. A positive displacement sorter (10), comprising:
a conveying surface (12) configured to convey articles in a longitudinal direction;
at least one diagonal take-away lane (14), extending diagonally from said conveying surface (12) to receive articles being diverted from said conveying surface (12);
a plurality of pushers (16) configured to move together in a lateral direction to displace an item on said conveying surface (12) to said diagonal take-away lane (14); and
a rotational system (20) that is configured to rotate a diverted article in the direction of the take-away lane (14), **characterized by** said rotational system (20) being a portion of the take-away lane (14) and being configured to rotate a leading portion of a diverted article in the direction of the take-away lane (14) with respect to its trailing portion.

2. The positive displacement sorter (10) as claimed in claim 1, wherein said rotational system (20) comprises another conveying surface (22) having a first portion (24) and a second portion (26), said first portion (24) biasing articles toward said second portion (26), said second portion (26) conveying articles in a directions of said take-away lane (14).

3. The positive displacement sorter (10) as claimed in claim 2, wherein said first portion (24) comprising a plurality of parallel rollers (28) that are angled to convey in the direction toward said second portion (26).

4. The positive displacement sorter (10) as claimed in claim 3, wherein said rollers (28) at an angle of between 10 degrees and 20 degrees with respect to said second portion (26).

5. The positive displacement sorter (10) as claimed in claim 2, wherein said second portion (26) has a surface with a higher friction than said first portion (24).

6. The positive displacement sorter (10) as claimed in claim 2, wherein said second portion (26) comprises a high-friction belt.

7. The positive displacement sorter (10) as claimed in claim 2, wherein said second portion (26) comprises of a plurality of high-friction parallel rollers (32).

8. The positive displacement sorter (10) as claimed in claim 2, wherein said first and second portions (24, 26) comprise parallel rollers (28, 32) and wherein said parallel rollers (28) of said first portion (24) are that are not co-axial with respect to the parallel rollers (32) of said second portion (26).

9. The positive displacement sorter (10) as claimed in claim 8 including separate drive belt assemblies (34, 36) configured to drive the parallel rollers (28) of said first portion (24) and the parallel rollers (32) of said second portion (26).

10. The positive displacement sorter (10) as claimed in claim 2, wherein said first and second portions (24, 26) have a same conveying speed.

11. A method of diverting articles with a positive displacement sorter (10), said method comprising:
a positive displacement sorter (10) having a conveying surface (12) configured to convey articles in a longitudinal direction, at least one diagonal take-away lane (14), extending diagonally from said conveying surface (12) to receive articles being diverted from said conveying surface (12); and a plurality of pushers (16) configured to move together in a lateral direction to displace an item on said conveying surface (12) to said diagonal take-away lane (14); and **characterized in that** the method further comprising:
rotating a leading portion of a diverted article in the direction of the take-away lane (14) with respect to its trailing portion using a rotational system (20) being a portion of the take-away lane (14).

12. The method of diverting articles as claimed in claim 11, wherein said rotating a leading portion of a diverted article in the direction of the take-away lane (14) includes a rotational system (20) being a portion of the take-away lane (14) configured to rotate the leading portion of the diverted article in the direction of the take-away lane (14).

## Patentansprüche

1. Zwangsverschiebungssortierer (10), der Folgendes umfasst:
eine Beförderungsfläche (12), die dafür konfiguriert ist, Artikel in einer Längsrichtung zu befördern,
mindestens eine diagonale Wegtransportbahn (14), die sich von der Beförderungsfläche (12) aus in Diagonalrichtung erstreckt, um Artikel aufzunehmen, die von der Beförderungsfläche (12) aus umgeleitet werden,
eine Vielzahl von Schubvorrichtungen (16), die dafür konfiguriert sind, sich gemeinsam in einer seitlichen Richtung zu bewegen, um einen Gegenstand auf der Beförderungsfläche (12) zu der diagonalen Wegtransportbahn (14)zu verschieben, und
eine Rotationsanlage (20), die dafür konfiguriert ist, einen umgeleiteten Artikel in der Richtung der Wegtransportbahn (14) zu drehen, **dadurch gekennzeichnet, dass** die Rotationsanlage (20) ein Abschnitt der Wegtransportbahn (14) ist und dafür konfiguriert ist, einen vorderen Abschnitt eines umgeleiteten Artikels im Verhältnis zu seinem hinteren Abschnitt in der Richtung der Wegtransportbahn (14) zu drehen.

2. Zwangsverschiebungssortierer (10) nach Anspruch 1, wobei die Rotationsanlage (20) eine weitere Beförderungsfläche (22) umfasst, die einen ersten Abschnitt (24) und einen zweiten Abschnitt (26) aufweist, wobei der erste Abschnitt (24) Artikel zu dem zweiten Abschnitt (26) hin vorspannt, wobei der zweite Abschnitt (26) Artikel in einer Richtung der Wegtransportbahn (14) befördert.

3. Zwangsverschiebungssortierer (10) nach Anspruch 2, wobei der erste Abschnitt (24) eine Vielzahl von parallelen Rollen (28) umfasst, die abgewinkelt sind, um in der Richtung zu dem zweiten Abschnitt (26) hin zu befördern.

4. Zwangsverschiebungssortierer (10) nach Anspruch 3, wobei die Rollen (28) in einem Winkel von zwischen 10 Grad und 20 Grad in Bezug auf den zweiten Abschnitt (26) angeordnet sind.

5. Zwangsverschiebungssortierer (10) nach Anspruch 2, wobei der zweite Abschnitt (26) eine Oberfläche mit einer höheren Reibung als der erste Abschnitt (24) aufweist.

6. Zwangsverschiebungssortierer (10) nach Anspruch 2, wobei der zweite Abschnitt (26) ein Band mit hoher Reibung aufweist.

7. Zwangsverschiebungssortierer (10) nach Anspruch 2, wobei der zweite Abschnitt (26) eine Vielzahl von parallelen Rollen (32) mit hoher Reibung aufweist.

8. Zwangsverschiebungssortierer (10) nach Anspruch 2, wobei der erste und der zweite Abschnitt (24, 26) parallele Rollen (28, 32) umfassen und wobei die parallelen Rollen (28) des ersten Abschnitts (24) nicht koaxial in Bezug auf die parallelen Rollen (32) des zweiten Abschnitts (26) sind.

9. Zwangsverschiebungssortierer (10) nach Anspruch 8, der gesonderte Antriebriemenbaugruppen (34, 36) einschließt, die dafür konfiguriert sind, die parallelen Rollen (28) des ersten Abschnitts (24) und die parallelen Rollen (32) des zweiten Abschnitts (26) anzutreiben.

10. Zwangsverschiebungssortierer (10) nach Anspruch 2, wobei der erste und der zweite Abschnitt (24, 26) eine gleiche Beförderungsgeschwindigkeit aufweisen.

11. Verfahren zum Umleiten von Artikeln mit einem Zwangsverschiebungssortierer (10), wobei das Verfahren Folgendes umfasst:
einen Zwangsverschiebungssortierer (10), der eine Beförderungsfläche (12), die dafür konfiguriert ist, Artikel in einer Längsrichtung zu befördern, mindestens eine diagonale Wegtransportbahn (14), die sich von der Beförderungsfläche (12) aus in Diagonalrichtung erstreckt, um Artikel aufzunehmen, die von der Beförderungsfläche (12) aus umgeleitet werden, und eine Vielzahl von Schubvorrichtungen (16), die dafür konfiguriert sind, sich gemeinsam in einer seitlichen Richtung zu bewegen, um einen Gegenstand auf der Beförderungsfläche (12) zu der diagonalen Wegtransportbahn (14) zu verschieben, aufweist, und **dadurch gekennzeichnet, dass** das Verfahren ferner Folgendes umfasst:
Drehen eines vorderen Abschnitts eines umgeleiteten Artikels im Verhältnis zu seinem hinteren Abschnitt in der Richtung der Wegtransportbahn (14) unter Verwendung einer Rotationsanlage (20), die ein Abschnitt der Wegtransportbahn (14) ist.

12. Verfahren zum Umleiten von Artikeln nach Anspruch 11, wobei das Drehen eines vorderen Abschnitts eines umgeleiteten Artikels in der Richtung der Wegtransportbahn (14) eine Rotationsanlage (20) einschließt, die ein Abschnitt der Wegtransportbahn (14) ist, der dafür konfiguriert ist, den vorderen Abschnitt des umgeleiteten Artikels in der Richtung der Wegtransportbahn (14) zu drehen.

## Revendications

1. Une trieuse (10) à déplacement positif, comprenant:
une surface (12) transporteuse configurée pour transporter des articles dans une direction longitudinale;
au moins une voie (14) diagonale d'enlèvement, s'étendant en diagonal de ladite surface (12) transporteuse pour recevoir des articles déviés de ladite surface (12) transporteuse;
une pluralité de poussoirs (16) configurés pour se mouvoir ensemble dans une direction latérale afin de déplacer un article sur ladite surface (12) transporteuse pour l'apporter à ladite voie (14) diagonale d'enlèvement; et
un système (20) rotationnel, qui est configuré pour faire tourner un article dévié dans la direction de la voie (14) d'enlèvement, **caractérisée en ce que** ledit système (20) rotationnel est une partie de la voie (14) d'enlèvement et est configuré pour faire tourner une partie en avant d'un article dévié dans la direction de la voie (14) d'enlèvement par rapport à sa partie en arrière.

2. La trieuse (10) à déplacement positif telle que revendiquée dans la revendication 1, dans laquelle ledit système (20) rotationnel comprend une autre surface (22) transporteuse ayant un premier tronçon (24) et un deuxième tronçon (26), ledit premier tronçon (24) faisant aller des articles vers ledit deuxième tronçon (26), ledit deuxième tronçon (26) transportant des articles dans une direction de ladite voie (14) d'enlèvement.

3. La trieuse (10) à déplacement positif telle que revendiquée dans la revendication 2, dans laquelle ledit premier tronçon (24) comprend une pluralité de rouleaux (28) parallèles, qui font un angle pour transporter dans la direction vers ledit deuxième tronçon (26).

4. La trieuse (10) à déplacement positif telle que revendiquée dans la revendication 3, dans laquelle lesdits rouleaux (28) font un angle compris entre 10 degrés et 20 degrés avec le deuxième tronçon (26).

5. La trieuse (10) à déplacement positif telle que revendiquée dans la revendication 2, dans laquelle ledit deuxième tronçon (26) a une surface ayant un frottement plus grand que ledit premier tronçon (24).

6. La trieuse (10) à déplacement positif telle que revendiquée dans la revendication 2, dans laquelle ledit deuxième tronçon (26) comprend une courroie à grand frottement.

7. La trieuse (10) à déplacement positif telle que revendiquée dans la revendication 2, dans laquelle ledit deuxième tronçon (26) comprend une pluralité de rouleaux (32) parallèles à grand frottement.

8. La trieuse (10) à déplacement positif telle que revendiquée dans la revendication 2, dans laquelle lesdits premier et deuxième tronçons (24, 26) comprennent des rouleaux (28, 32) parallèles et dans laquelle lesdits rouleaux (28) parallèles dudit premier tronçon (24) ne sont pas co-axiaux aux rouleaux (32) parallèles dudit deuxième tronçon (26).

9. La trieuse (10) à déplacement positif telle que revendiquée dans la revendication 8, comprenant des ensembles (34, 36) distincts à courroie d'entraînement configurés pour entraîner les rouleaux (28) parallèles dudit premier tronçon (24) et les rouleaux (32) parallèles dudit deuxième tronçon (26).

10. La trieuse (10) à déplacement positif telle que revendiquée dans la revendication 2, dans laquelle lesdits premier et deuxième tronçons (24, 26) ont une même vitesse de transport.

11. Un procédé pour dévier des articles par une trieuse (10) à déplacement positif, ledit procédé comprenant:
une trieuse (10) à déplacement positif ayant une surface (12) transporteuse configurée pour transporter des articles dans une direction longitudinale, au moins une voie (14) diagonale d'enlèvement s'étendant en diagonal de ladite surface (12) transporteuse pour recevoir des articles déviés de ladite surface (12) transporteuse; et une pluralité de poussoirs (16) configurés pour se mouvoir ensemble dans une direction latérale pour envoyer un article sur ladite surface (12) transporteuse à ladite voie (14) diagonale d'enlèvement; et **caractérisé en ce que** le procédé comprend en outre:
faire tourner une partie en avant d'un article dévié dans la direction de la voie (14) d'enlèvement par rapport à sa partie en arrière, en utilisant un système (20) rotationnel, qui est une partie de la voie (14) d'enlèvement.

12. Le procédé de déviation d'articles tel que revendiqué dans la revendication 11, dans lequel faire tourner une partie en avant d'un article dévié dans la direction de la voie (14) d'enlèvement comprend un système (20) rotationnel, qui est une partie de la voie (14) d'enlèvement, configuré pour faire tourner la partie en avant de l'article dévié dans la direction de la voie (14) d'enlèvement.
